Europäisches Patentamt

(19) **European Patent Office**

Office européen des brevets

(11) Veröffentlichungsnummer: **0 014 732**
**B1**

(12) # EUROPÄISCHE PATENTSCHRIFT

(45) Veröffentlichungstag der Patentschrift:
**07.10.81**

(51) Int. Cl.³: **H 02 G 3/26**, F 16 L 3/22

(21) Anmeldenummer: **79103143.8**

(22) Anmeldetag: **27.08.79**

(54) **Vorrichtung zur Befestigung von Kabelwannen oder Kabelpritschen an einer Gebäudedecke oder Gebäudewand.**

(30) Priorität: **26.02.79 CH 1865/79**

(43) Veröffentlichungstag der Anmeldung:
**03.09.80 Patentblatt 80/18**

(45) Bekanntmachung des Hinweises auf die Patenterteilung:
**07.10.81 Patentblatt 81/40**

(84) Benannte Vertragsstaaten:
**AT BE DE FR GB IT NL SE**

(56) Entgegenhaltungen:
**DE-A-1 515 670**
**DE-B-2 141 849**
**FR-A-2 176 309**
**FR-A-2 238 802**
**FR-A-2 259 714**
**GB-A-1 253 577**

(73) Patentinhaber: **H. Heer & Co., Industriestrasse 28,
CH-4600 Olten (CH)**

(72) Erfinder: **Buluschek, Bruno, Brandholzstrasse 2,
CH-8117 Fällanden (CH)**
Erfinder: **Mägerli, Walter, Winznauerstrasse 53,
CH-4632 Trimbach (CH)**
Erfinder: **Müller, Erich, Frohburgstrasse 60,
CH-4663 Aarburg (CH)**

(74) Vertreter: **Patentanwaltsbureau Scheidegger, Zwicky &
Co., Stampfenbachstrasse 48 Postfach, CH-8023 Zürich
(CH)**

## Vorrichtung zur Befestigung von Kabelwannen oder Kabelpritschen
## an einer Gebäudedecke oder Gebäudewand

Die Erfindung betrifft eine Vorrichtung zur Befestigung von Kabelwannen oder Kabelpritschen an einer Gebäudewand oder -decke, wobei aneinander anschliessend angeordnete Kabelwannen oder -pritschen auf in Abständen voneinander an der Gebäudewand oder -decke befestigten Auslegern abgestützt sind, die von ihrem befestigungsseitigen Ende sich quer zur Längsrichtung der Kabelwannen oder -pritschen erstrecken. Bei der Wandmontage sind die Ausleger an der Wand befestigt, während bei der Deckenmontage ein sogenannter Stiel von der Decke vertikal herabhängt, an dem ein oder wahlweise mehrere etagenweise übereinander angeordnete Ausleger befestigt sind (z. B. DE-A-1 515 670).

In den Kabelwannen oder -pritschen werden, wie der Name sagt, Kabel innerhalb von Gebäuden, insbesondere von Industrieanlagen, verlegt, wobei entsprechend der Dimensionierung eine Mehrzahl von Kabeln nebeneinander in den aneinandergereiht montierten Kabelwannen oder -pritschen Platz finden, so dass diese einschliesslich der Kabel ein ziemlich grosses, an der Wand oder der Decke festzuhaltendes Gewicht darstellen.

In bestimmten Industriebauten werden besonders hohe Anforderungen an die Stabilität der Aufhängung und Befestigung der Kabelwannen oder -pritschen gestellt. Wenn Erdbebensicherheit gefordert wird, sind die Befestigungen für höchste Beanspruchungen durch Kräfte in Vertikalrichtung sowie in Querrichtung und Längsrichtung der Kabelwannen oder -pritschen auszulegen. Wenn die Kabelwannen oder -pritschen bei einem Erdbeben geschüttelt werden, lässt sich nur durch sehr stabile Befestigung eine Zerstörung der Einrichtung verhindern.

Wenn die Kabelwannen oder -pritschen jedoch in Räumen montiert sind, in denen hohe Temperaturen herrschen oder zeitweilig auftreten können, muss die Konstruktion der aus einer Vielzahl von aneinander anschliessend montierten Kabelwannen oder -pritschen bestehenden Einrichtung derart ausgeführt sein, dass eine Wärmedehnung der einzelnen Elemente ohne Deformation oder Auftreten unzulässiger Spannungen möglich ist. In diesem Fall muss demnach eine Beweglichkeit zwischen einzelnen Elementen der gesamten Kanaleinrichtung möglich sein. Die beiden Bedingungen Erdbebensicherheit und Befestigung mit Wärmedehnungsmöglichkeit erfordern im Prinzip in ihren Wirkungen entgegengesetzte Massnahmen.

Das Problem der Wärmeausdehnung lässt sich in bekannter Weise mit zwischen den in Reihe hintereinander angeordneten Kabelwannen oder -pritschen vorgesehenen Dilatationsfugen beherrschen. Dabei wird ein Abstand zwischen den einzelnen Kabelwannen durch Verbindungselemente überbrückt, in denen die Enden der Kabelwannen oder -pritschen verschieblich gehalten sind. Für die Erdbebensicherheit müsste aber eine auf zwei Auslegern abgestützte Kabelwanne oder -pritsche an einem der Ausleger unverrückbar fest montiert sein, damit die bei einem Erdbeben in vertikaler Richtung sowie in Querrichtung und Längsrichtung der Kabelwanne oder -pritsche wirkenden Kräfte vom Ausleger und dessen Wand- oder Deckenbefestigung aufgenommen werden, während eine bewegliche Abstützung am anderen Ausleger eine Wärmeausdehnung zulässt. Durch die in Längsrichtung wirkenden Kräfte werden jedoch dann an dem Ausleger mit fest montierter Kabelwanne oder -pritsche aufgrund des Abstandes dieser Befestigung von der Wand grosse Momente auf die Wandbefestigung dieses Auslegers übertragen, die es erforderlich machen, den Ausleger und seine Befestigung sehr massiv auszubilden. Dieser Umstand wirkt sich in noch stärkerem Masse bei der Befestigung des Auslegers an einem Deckenstiel aus, der von der Gebäudedecke herabhängend mit mehreren Auslegern für die etagenweise Anordnung von Kabelwannen oder -pritschen übereinander versehen sein kann. Eine sehr massive Ausbildung der Auslegerbefestigung erfordert einen erhöhten Materialverbrauch, was gleichbedeutend mit höheren Kosten für Material und erschwerte Arbeit aufgrund des grösseren Gewichtes der Teile ist.

Die vorliegende Erfindung setzte sich daher zum Ziel, den in der vorstehend geschilderten Weise für die Schaffung einer Vorrichtung der eingangs genannten Art für höchste Sicherheitsanforderungen notwendigen Aufwand an Material und erschwerter Arbeit zu vermeiden und das Problem der Beherrschung der am Ausleger aufzunehmenden Kräfte unter Extremsituationen, insbesondere der durch die Kräfte in Längsrichtung verursachten Momentenkräfte, auf andere Weise zu lösen. Dies wird bei der Vorrichtung der eingangs genannten Art erfindungsgemäss dadurch erreicht, dass nahe am befestigungsseitigen Ende des Auslegers das eine Ende einer Axialkraftstrebe befestigt ist, die in einer mit der Unterseite der Kabelwanne oder -pritsche parallelen Ebene mit dem Ausleger einen Winkel einschliesst und deren anderes Ende im Abstand vom Ausleger an der Unterseite der Kabelwanne oder -pritsche befestigt ist zwecks Übertragung von durch Bewegungen der Kabelwannen oder -pritschen in Längsrichtung derselben verursachten Kräften auf das befestigungsseitige Ende des Auslegers.

Der Vorteil dieser Anordnung der Axialkraftstrebe besteht darin, dass aufgrund der geringen Distanz zwischen dem Befestigungspunkt der Axialkraftstrebe und dem befestigungsseitigen Ende des Auslegers das dort wirksame Moment unbedeutend klein ist und verglichen mit dem bei der bisher üblichen unbeweglichen Befestigung von Kabelwannen am Ausleger auftretenden Moment auf einen Wert in der Grössenordnung von 10% reduziert ist. Aufgrund dieser Tatsache ist eine wesentlich leichtere Bauweise mit den entsprechenden Kostenvorteilen möglich.

Der Ausleger und die Axialkraftstrebe schliessen vorzugsweise einen Winkel von 45° ein. In zweckmässiger Ausgestaltung ist bei einer Kabelwanne die auf Zug oder Druck beanspruchte Axialkraftstrebe mit ihrem Ende unterseitig auf der Längsmitte der Kabelwanne mittels Verschraubung befestigt. Bei einer aus Holmen und Querstreben bestehenden Kabelpritsche ist zweckmässig die Axialkraftstrebe unterseitig an den beiden Holmen mittels je einer Verschraubung befestigt. Wenn der wesentliche Teil der in Längsrichtung wirksamen Kräfte mittels der Axialkraftstrebe übertragen wird, die auch wie die Kabelwanne oder -pritsche einer Wärmedehnung unterworfen ist, die infolge der Halterung der Kabelwanne oder -pritsche am Ausleger mit in Längsrichtung vorhandenem Bewegungsspiel nicht behindert wird, so müssen am Ausleger noch die Kräfte in vertikaler Richtung sowie die Querkräfte in horizontaler Richtung übertragen werden. Dies wird zweckmässig dadurch erreicht, dass zur Halterung der Kabelwanne oder -pritsche am Ausleger mit Bewegungsspiel in Längsrichtung der Kabelwanne oder -pritsche an der Unterseite derselben eine über eine Teillänge gekröpfte Leiste befestigt ist, deren im Abstand parallel zur genannten Unterseite sich erstreckender Rand den oberen Schenkel des als Profileisen-Träger ausgebildeten Auslegers untergreift, zwecks Übertragung der Vertikalkräfte und zur Verhinderung des Abhebens der Kabelwanne oder -pritsche, und dass die Leiste über eine weitere Teillänge flach ausgebildet ist und dieser flache Leistenteil in den entsprechend dieser Teillänge ausgeklinkten oberen Schenkel des Auslegers passend eingreift zwecks Übertragung der horizontalen Querkräfte von der Kabelwanne oder -pritsche auf den Ausleger, wobei die an der Kabelwanne oder -pritsche befestigte Leiste bezüglich des ausgeklinkten Auslegerschenkels derart angeordnet ist, dass bei montierter Axialkraftstrebe eine Abstandsänderung der an der Kabelwanne oder -pritsche montierten Leiste gegenüber dem Ausleger für ein Bewegungsspiel in Längsrichtung möglich ist.

Weitere Vorteile der Erfindung ergeben sich aus der Beschreibung und den Zeichnungen, in denen verschiedene Ausführungsformen des Erfindungsgegenstandes rein beispielsweise dargestellt sind. Es zeigt

Fig. 1 eine schaubildliche Darstellung einer auf zwei für die Wandmontage bestimmten Auslegern gehaltenen Kabelwanne,

Fig. 2 eine schaubildliche Darstellung einer auf zwei für die Wandmontage bestimmten Auslegern gehaltenen Kabelpritsche,

Fig. 3 eine schaubildliche Darstellung zweier Kabelwannen, die auf an Deckenstielen befestigten Auslegern gehalten sind,

Fig. 4 die an der Unterseite einer Kabelwanne montierte und am Ausleger formschlüssig gehaltene Leiste in Draufsicht und in grösserem Massstab,

Fig. 5 einen Vertikalschnitt durch Leiste, Ausleger und Abschnitt der Kabelwanne, gemäss der Linie I–I in Fig. 4.

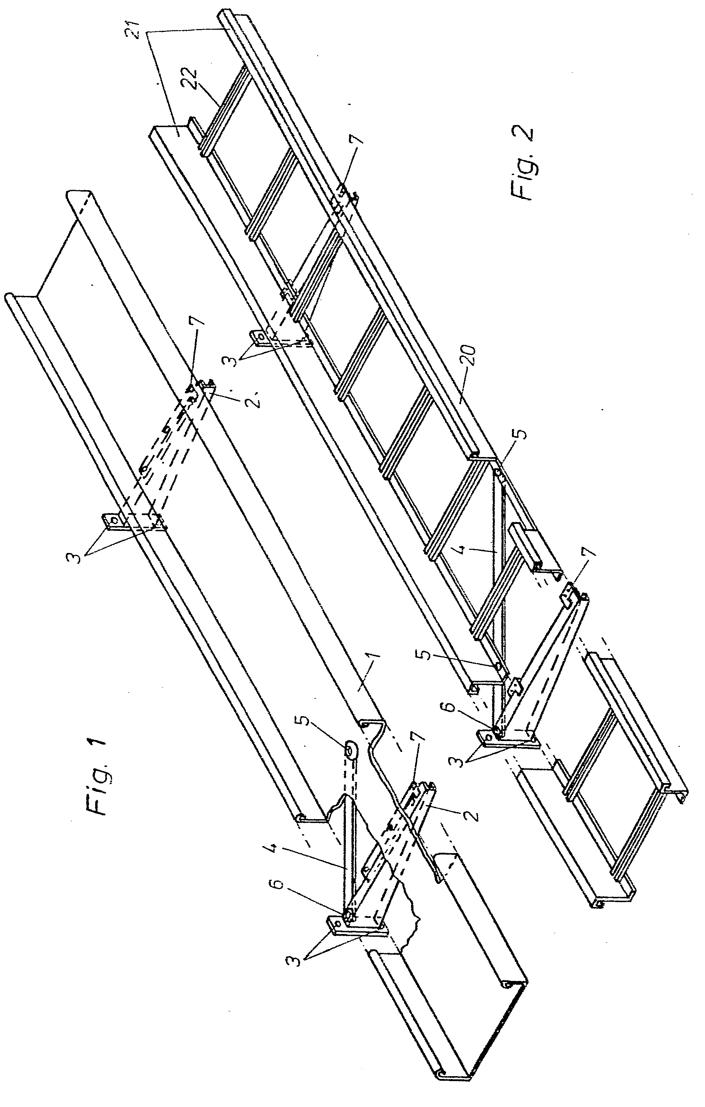

Gemäss Fig. 1 ist eine Kabelwanne 1 auf zwei im Abstand voneinander zur Befestigung an einer Wand bestimmten Auslegern 2 gehalten, die jeweils aus einem U-Profil-Träger mit zum freien Ende hin sich verjüngendem Steg und einer am breiteren Ende angeschweissten Montageplatte bestehen, die mittels Schrauben 3 an einer Wand zu befestigen ist. Zur Verdeutlichung ist die Kabelwanne 1 im Bereich des in Fig. 1 vorderen Auslegers 2 teilweise weggeschnitten dargestellt, so dass die unterhalb der Kabelwanne in einer mit dem Ausleger parallelen Ebene und mit dem Ausleger einen Winkel von ca. 45° einschliessende Axialkraftstrebe 4 erkennbar ist, die mit ihrem einen Ende mittels einer Verschraubung 5 auf der Längsmitte der Kabelwanne 1 befestigt ist und die mit ihrem anderen Ende mittels einer Verschraubung 6 am befestigungsseitigen Ende des Auslegers am oberen Schenkel des als U-Profil ausgebildeten Auslegers 2 befestigt ist. In Längsrichtung der Kabelwanne 1 wirkende Kräfte werden von dieser Axialkraftstrebe 4 auf das befestigungsseitige Ende des Auslegers 2 übertragen, so dass das bei sonst üblicher fester Schraubverbindung der Kabelwanne mit dem Ausleger auftretende Moment auf die am Ende des Auslegers befestigte Montageplatte auf einen Wert in der Grössenordnung von 10% reduziert wird. Bei in einer Reihe aneinander anschliessend auf Auslegern gehaltenen Kabelwannen wird bei jeder Kabelwanne jeweils eine Axialkraftstrebe 4 in der beschriebenen Weise mit einem Ausleger 2 verbunden. Am anderen Ausleger ist die Kabelwanne mit Bewegungsmöglichkeit in Längsrichtung gehalten.

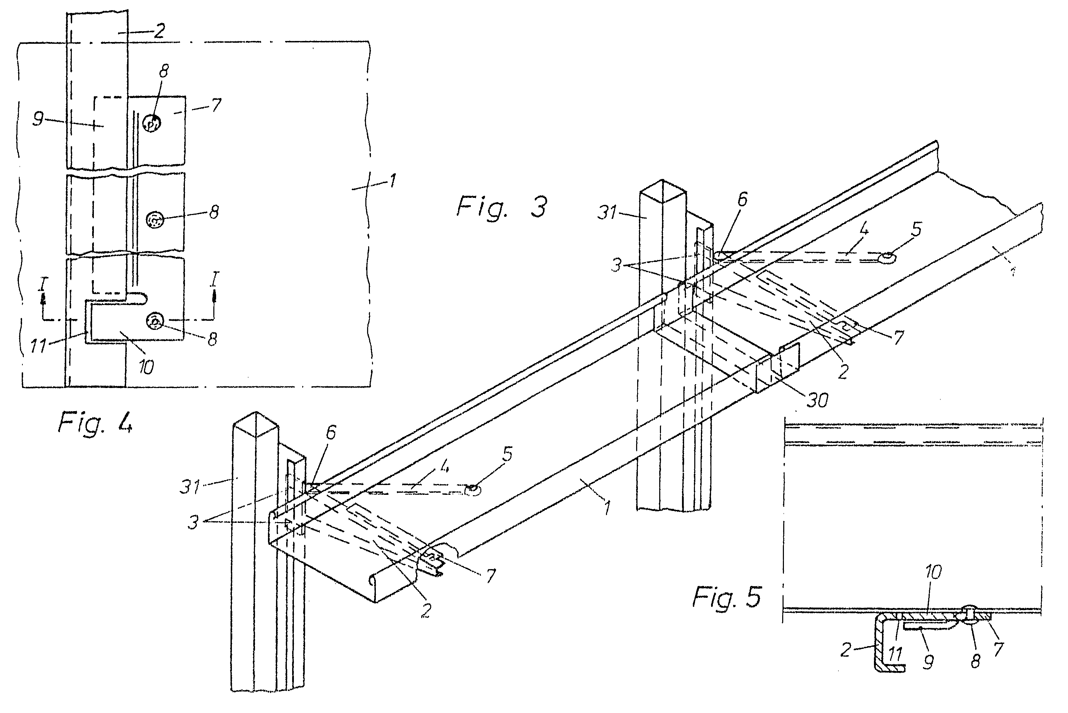

Um die Kabelwanne an den Auslegern so zu halten, dass Kräfte in vertikaler Richtung wie auch die Querkräfte auf den Ausleger übertragen werden, aber ein Bewegungsspiel in Längsrichtung der Kabelwanne vorhanden ist, ist an der Unterseite der Kabelwanne bei jedem Ausleger eine speziell ausgebildete Leiste 7 angenietet, die in den Fig. 4 und 5 in grösserem Massstab dargestellt ist. Diese Leiste 7 ist mit Befestigungsmitteln, vorzugsweise drei Nieten 8, an der Unterseite der Kabelwanne 1 befestigt. Zur Verdeutlichung ist in der Draufsicht gemäss Fig. 4 die Kabelwanne weggelassen und nur mit strichpunktierten Linien ausschnittweise angedeutet, um erkennbar zu machen, wie die Leiste 7 mit dem Ausleger 2 zusammenwirkt. Die Leiste 7 ist über eine Teillänge gekröpft ausgebildet und besitzt damit einen im Abstand parallel zur Unterseite der Kabelwanne sich erstreckenden Rand 9, der den oberen Schenkel des als U-Profil ausgebildeten Auslegers 2 untergreift, so dass dieser Schenkel des Auslegers sich zwischen dem Rand 9 der Leiste und der Kabelwannen-Unterseite befindet. Dadurch ist die Übertragung der Vertikalkräfte gesichert bzw. kann sich die Kabelwanne nicht vom Ausleger abheben. Die Leiste 7 ist ferner über eine weitere Teillänge 10 am Ende der Leiste flach ausgebildet und greift mit diesem Abschnitt genau passend in den entsprechend dieser Teillänge ausgeklinkten oberen Schenkel des Auslegers 2 ein, so dass an dieser Stelle die horizontalen Querkräfte von der Kabelwanne auf den Ausleger übertragen werden. Dabei ist zwischen dem stirnseitigen Ende des flachen Leistenteils (Teillänge 10) und der inneren Kante am Schenkel des Auslegers 2 ein Abstand 11 für ein Bewegungsspiel in Längsrichtung von mindestens 2 mm vorhanden.

Die in Fig. 2 dargestellte Kabelpritsche 20, die aus zwei zueinander parallelen Holmen 21 und Querstreben 22 besteht, ist in gleicher Weise an zwei zur Befestigung an einer Wand bestimmten Auslegern 2 gehalten, mit dem Unterschied, dass die Axialkraftstrebe 4 an den beiden Holmen 21 mittels je einer Verschraubung 5 befestigt ist. Das andere Ende der Axialkraftstrebe 4 ist in gleicher Weise wie bei der Kabelwanne gemäss Fig. 1 mittels einer Verschraubung 6 mit dem Ausleger 2 fest verbunden. Auch die Leiste 7 für die Übertragung der Querkräfte und Vertikalkräfte ist im Prinzip übereinstimmend mit der im Zusammenhang mit der Kabelwanne beschriebenen Leiste ausgebildet. Da die Befestigung nur an den beiden Holmen der Kabelpritsche möglich ist, können entsprechend kurze Leisten 7 an jedem der Holme befestigt sein.

In Fig. 3 ist dargestellt, dass eine Kabelwanne 1 mit einer anschliessenden, gleichausgebildeten Kabelwanne mit Hilfe von die Dilatationsfuge zwischen den Kabelwannen überbrückenden Elementen 30 verbunden ist, wobei im dargestellten Fall jede Kabelwanne nur auf einem Ausleger 2 aufliegt, der dicht neben einer Dilatationsfuge angeordnet ist. Hier ist bei jedem Ausleger pro Kabelwanne eine Axialkraftstrebe 4 in gleicher Weise wie beim in Fig. 1 dargestellten Beispiel mit einem Ende mittels einer Verschraubung 5 an der Kabelwanne auf deren Längsmitte befestigt und mit dem anderen Ende mittels einer Verschraubung 6 am befestigungsseitigen Ende des Auslegers 2 befestigt. Beim in Fig. 3 dargestellten Beispiel sind die Ausleger 2 jeweils an einem Deckenstiel 31 befestigt, die zur Befestigung an einer Gebäudedecke bestimmt sind, so dass an den von der Gebäudedecke herabhängenden Deckenstielen mehrere Kabelkanäle etagenweise übereinander angeordnet werden können. Der Unterschied gegenüber den vorstehend beschriebenen Beispielen besteht hier nur darin, dass der als U-Profil ausgebildete Ausleger 2 mit seinem Steg an den Deckenstiel 31 mittels Schrauben 3 seitlich angeschraubt ist. Für die Übertragung der Kräfte in horizontaler Richtung und in Querrichtung dient auch hier die Leiste 7 in gleicher Ausführung.

## Patentansprüche

1. Vorrichtung zur Befestigung von Kabelwannen (1) oder Kabelpritschen (20) an einer Gebäudewand oder -decke, wobei aneinander anschliessend angeordnete Kabelwannen (1) oder -pritschen (20) auf in Abständen voneinander an der Gebäudewand oder -decke befestigten Auslegern (2) abgestützt sind, die von ihrem befestigungsseitigen Ende sich quer zur Längsrichtung der Kabelwannen (1) oder -pritschen (20) erstrecken, dadurch gekennzeichnet, dass nahe am befestigungsseitigen Ende des Auslegers (2) das eine Ende einer Axialkraftstrebe (4) befestigt ist, die in einer mit der Unterseite der Kabelwanne (1) oder -pritsche (20) parallelen Ebene mit dem Ausleger (2) einen Winkel einschliesst und deren anderes Ende im Abstand vom Ausleger (2) an der Unterseite der Kabelwanne (1) oder -pritsche (20) befestigt ist zwecks Übertragung von durch Bewegungen der Kabelwannen (1) oder -pritschen (20) in Längsrichtung derselben verursachten Kräften auf das befestigungsseitige Ende des Auslegers (2).

2. Vorrichtung nach Anspruch 1, dadurch gekennzeichnet, dass der Ausleger (2) und die Axialkraftstrebe (4) einen Winkel von vorzugsweise 45° einschliessen.

3. Vorrichtung nach Anspruch 1, dadurch gekennzeichnet, dass die Axialkraftstrebe (4) mit ihrem anderen Ende auf der Längsmittelachse der Kabelwanne (1) an dieser mittels Verschraubung (5) befestigt ist.

4. Vorrichtung nach Anspruch 1, dadurch gekennzeichnet, dass bei einer aus Holmen (21) und Querstreben (22) bestehenden Kabelpritsche die Axialkraftstrebe (4) an den beiden Holmen (21) mittels je einer Verschraubung (5) befestigt ist.

5. Vorrichtung nach Anspruch 1 und einem der Ansprüche 3 oder 4, dadurch gekennzeichnet, dass zur Halterung der Kabelwanne (1) oder -pritsche (20) am Ausleger (2) mit Bewegungsspiel in Längsrichtung der Kabelwanne (1) oder -pritsche (20) an der Unterseite derselben eine über eine Teillänge gekröpfte Leiste (7) befestigt ist, deren im Abstand parallel zur genannten Unterseite sich erstreckender Rand (9) den oberen Schenkel des als Profileisen-Träger ausgebildeten Auslegers (2) untergreift zwecks Übertragung der Vertikalkräfte und zur Verhinderung des Abhebens der Kabelwanne (1) oder -pritsche (20), und dass die Leiste (7) über eine weitere Teillänge (10) flach ausgebildet ist und dieser flache Leistenteil in den entsprechend dieser Teillänge (10) ausgeklinkten oberen Schenkel des Auslegers (2) in an sich bekannter Weise passend eingreift zwecks Übertragung der horizontalen Querkräfte von der Kabelwanne (1) oder -pritsche (20) auf den Ausleger (2), wobei die an der Kabelwanne (1) oder -pritsche (20) befestigte Leiste (7) bezüglich des ausgeklinkten Auslegerschenkels derart angeordnet ist, dass bei montierter Axialkraftstrebe (4) eine Abstandsänderung der Kabelwanne oder -pritsche mit montierter Leiste (7) gegenüber dem Ausleger (2) für ein Bewegungsspiel (11) in Längsrichtung möglich ist.

## Claims

1. A device for attaching elongated cable-supporting trays to a wall or ceiling of a building by means of elongated-supporting arm members being spaced a part and positioned so as to extend transversely to the longitudinal direction of the cable-supporting tray and having one end connected to a wall or ceiling of a building, characterised in that an axial force strut element (4), by one of it's ends, is connected to said supporting arm member (2) near the end thereof which is connected to a building wall or ceiling, the opposite end of said strut element being connected to the underside of the alongated cable-supporting tray (1, 20) at a location spaced from the supporting arm member (2) so that the strut element and the supporting arm member enclose an angle in a plane which is parallel to the underside of the elongated cable-supporting tray (1, 20), said strut element (4) being capable of transmitting forces caused by movements of the elongated cable-supporting tray along the longitudinal direction thereof to said supporting arm member (2) at the end thereof which is connected to a building wall or ceiling.

2. A device as defined in claim 1, characterised in that said supporting arm member (2) and said strut element (4) enclose an angle of preferably 45°.

3. A device as defined in claim 1, characterised in that said opposite end of the strut element (4) is connected by means of a bolted joint (5) to said elongated cable-supporting tray (1) at the longitudinal center line thereof.

4. A device as defined in claim 1, characterised in that said elongated cable-supporting tray is in the form of an elongated rack (20) having two parallel elongated spars (21) and transverse struts (22) interconnected therebetween and in that said strut element (4) is connected to each one of said parallel elongated spars (21) by means of a first and a second bolted joint (5), respectively.

5. A device as defined in claim 1 and in one of the claims 3 or 4, characterised in that an elongated strip element (7) is fixedly attached to the underside of the elongated cable-supporting tray (1, 20), a portion of the length of said elongated strip element (7) being bent so as to have a flat section (9) which extends parallel to and at a distance from the underside of the elongated cable-supporting tray such that an upper leg portion of said supporting arm member (2) being a profile iron beam having a C-shaped cross-section will fit between said flat section (9) of said elongated strip element (7) and the underside of said cable-supporting tray for transmitting vertical forces and for preventing said cable-supporting tray from being lifted from said supporting arm element (2); a further portion (10) of the lenght of said elongated strip element (7) being formed as a flat finger portion being dimensioned so as to fit – in known manner – into a cut-out area in the upper leg portion of said supporting arm member (2) for transmitting horizontal forces from said elongated cable-supporting tray to said supporting arm member (2), the elongated strip element (7) being attached to the underside of the elongated cable-supporting tray so that, with the axial force strut element (4) being mounted, a clearance (11) is provided between said supporting arm member (2) and said elongated strip element (7) for allowing a certain movement of the cable-supporting (1, 20) in the longitudinal direction thereof with respect to the supporting arm member.

## Revendications

1. Dispositif de fixation de caniveaux à câbles, en forme de gouttière (1) ou en forme de claie (20), au plafond ou à une paroi de bâtiment, les caniveaux 01a câbles (1, 20) disposés de manière contiguë étant supportés par des consoles (2) fixées à distance l'une de l'autre sur le plafond ou la paroi du bâtiment, consoles qui s'étendent à partir de leur extrémité côté fixation transversalement à la direction longitudinale des caniveaux de câbles (1, 20), caractérisé en ce que tout près de et sur l'extrémité côté fixation de la console (2) est fixée une extrémité d'un tirant à effort axial (4), qui dans un plan parallèle à la face inférieure du caniveau de câbles (1, 20) fait un angle avec la console (2) et dont l'autre extrémité est fixée à distance de la console (2) sur la face inférieure du caniveau à câbles (1, 20) pour la transmission des forces produites par les déplacements des caniveaux à câbles (1, 20) dans leur direction longitudinale sur l'extrémité côté fixation de la console (2).

2. Dispositif suivant la revendication 1, caractérisé en ce que la console (2) et le tirant (4) forment un angle de préférence de 45°.

3. Dispositif suivant la revendication 1, caractérisé en ce que le tirant (4) est fixé avec cette autre extrémité dans l'axe central longitudinal de la gouttière de câbles (1) sur celle-ci au moyen d'un système à vis (5).

4. Dispositif suivant la revendication 1, caractérisé en ce que dans une claie à câbles (20) constituée de longerons (21) et de traverses (22) le tirant (4) est fixé sur les deux longerons (21) au moyen chaque fois d'un systéme à vis (5).

5. Dispositif suivant la revendication 1 et l'une quelconque des revendications 3 et 4, caractérisé en ce que pour le maintien du caniveau à câbles (1, 20) sur la console (2) avec un jeu dans la direction longitudinale du caniveau à câbles (1, 20) est fixée sur la face inférieure de ce dernier une réglette (7) incurvée sur une partie de sa longueur, dont le bord (9) s'étendant parallèlement à distance de cette face inférieure vient en prise avec l'aile supérieure de la console (2), conformée comme un support en profilé, pour la transmission des forces verticales et pour empêcher le soulèvement du caniveau à câbles (1, 20), et en ce que la réglette (7) est conformée de manière plane sur une autre partie (10) de sa longueur et cette partie de réglette plane vient en prise convenablement d'une manière connue en soi dans l'aile supérieure de la console (2) encochée en rapport avec cette longueur partielle (10) pour la transmission des forces transversales horizontales du caniveau à câbles (1, 20) sur la console, la réglette (7) fixée sur le caniveau à câbles (1, 20) étant disposée par rapport à l'aile de console encochée de telle manière que, le tirant (4) étant placé, un jeu (11) en direction longitudinale du caniveau à câbles (1, 20) est assuré entre la console (2) et la réglette (7) montée, pour permettre un certain déplacement du caniveau à câbles (1, 20) en direction longitudinale par rapport à la console (2).

Fig. 1

Fig. 2

0 014 732

Fig. 3

Fig. 4

Fig. 5

0 014 732